# EUROPEAN PATENT SPECIFICATION

(11) **EP 3 653 053 B1**
(45) Date of publication and mention of the grant of the patent: **15.06.2022**
(21) Application number: 18382823.5
(22) Date of filing: 19.11.2018
(51) Int. Cl.: A01N 25/30, A01N 31/02, A01N 43/16, A01P 9/00, A01N 59/00, A01N 59/02, A01N 59/14, A01N 59/26, A01N 59/10, A01N 37/02, A01N 37/06, A01N 37/04, A01N 37/36, A01N 37/40

(54) **COMPOSITION FOR ERADICATING THE APPLE SNAIL PEST**
ZUSAMMENSETZUNG ZUR BESEITIGUNG DER APFELSCHNECKENPLAGE
COMPOSITION D'ÉRADICATION DU PARASITE DE L'ESCARGOT DE LA POMME

(43) Date of publication of application: 20.05.2020
(73) Proprietor: Innovark Area, S.L., 25192 Lleida (ES)
(72) Inventor: ARTIGAS PUERTO, RAMON, 25001 Lleida (ES)
(74) Representative: Durán-Corretjer, S.L.P.

(56) References cited:
- WO-A1-2014/016640
- CN-A- 108 342 256
- CN-B- 103 923 514
- DK-A- 200 800 421
- US-A- 5 503 836
- US-A1- 2006 045 898
- US-A1- 2012 288 335
- US-A1- 2016 298 059
- US-A1- 2017 086 467
- Pamela Martin: "How to Kill Snails With Vinegar | Hunker", , 16 January 2018 (2018-01-16), pages 1-5, XP055569534, Retrieved from the Internet: URL:https://web.archive.org/web/2018011610 3059/http://www.hunker.com/13405724/how-to -kill-snails-with-vinegar#expand [retrieved on 2019-03-14]
- Marleena Hagner ET AL: "Using the copse snail Arianta arbustorum (Linnaeus) to detect repellent compounds and the quality of wood vinegar", International Journal of Environmental Research Vol.9 Nr.1, 53-60, 1 January 2015 (2015-01-01), pages 53-60, XP055569538, Retrieved from the Internet: URL:https://ijer.ut.ac.ir/article_873_cd65 f1e7d2d0ddcaaadbdd32dcfda314.pdf
- EDUARDO CYRINO OLIVEIRA-FILHO ET AL: "Bioassays with freshwater snails Biomphalaria sp.: from control of hosts in public health to alternative tools in ecotoxicology", INVERTEBRATE REPRODUCTION & DEVELOPMENT, vol. 61, no. 1, 2 January 2017 (2017-01-02), pages 49-57, XP055569542, ISSN: 0792-4259, DOI: 10.1080/07924259.2016.1276484

## Description

The present invention relates to the pest control and eradication sector. Specifically, the present invention relates to a composition for eradicating the apple snail pest, comprising from 20 to 80 vol.% of the total composition of a mineral acid or an organic acid, wherein the acid is acetic acid, from 5 to 20 vol.% of the total composition of a non-ionic surfactant wherein the non-ionic surfactant is an ethoxylated alcohol of the type alkyl polyethylene-polypropylene glycol (EO-PO), and water, and to the use thereof.

*Pomacea canaliculata,* commonly known as the apple snail, is a species of freshwater gastropod mollusc within the Pomacea genus of the Ampullariidae family. It is a major invasive pest that is particularly voracious, causing huge losses and damage in paddy fields, and resistant to adverse conditions.

The apple snail is an aquatic mollusc originating from the Amazon basin. It feeds on all kinds of aquatic plants, including rice grains and plants, and is very resistant to adverse and extreme conditions, for example drought and drying-out periods alternating with heavy precipitation or floods. In addition, it can spread a parasite (*Angiostrongylus cantonensis*) that causes meningitis in humans.

These prolific gastropods are damaging not only due to their predatory actions on aquatic plants and algae, but also their high population density; they push out other species, altering the balance and proper functioning of the ecosystems they invade.

Most land and aquatic snails are hermaphrodites, but apple snails exist in separate sexes. There are three times as many females as males; the females are very fertile and with each oviposition can lay an average of up to 400 bright pink eggs, which turn a whitish colour before hatching. The eggs are deposited out of the water. Females, which usually live for four to ten years, deposit eggs every ten days, i.e. three times a month for nine months of the year (March to November), thus producing between eight and ten thousand eggs each year. The eggs contain a neurotoxin (PV2) that reduces their natural predators. The snail produced from each hatched egg reaches sexual maturity after 60-85 days.

Their reproductive abilities and rapid development to maturity are precisely why just a few snails can cause a potential infestation in a short time.

The shell of the apple snail has around five turns and grows throughout its life, reaching around 40-70 mm in diameter. It is formed of several layers. The top layer is a thin protein layer containing various pigments; this gives the snail its colour. Below this there is a white calcium carbonate layer, which gives the shell its hardness. The joins in the spirals form 90° angles that are very prominent in relation to the shell.

The soft body of the apple snails has a guard, the operculum, which is a corneous plate the snail uses to close the shell opening to avoid being eaten. In addition, the operculum helps seal the shell to prevent dehydration and allow the snail to spend the long months of drought buried in the mud.

In 2009, the species *Pomacea maculata,* considered one of the 100 most destructive invasive species in the world, was detected on the left hemidelta of the Ebro Delta in the province of Tarragona. To date, after having tested up to 90 different products, there is still no adequate substance available, i.e. a substance that is effective at eradicating the apple snail while also respecting the ecosystem and being accessible in economic terms to combat this pest.

Among the products known in the prior art, saponins combined with agronomic measures, such as dry seeding, fallowing or flooding ditches and paddy fields with seawater, are the main weapons rice farmers have to manage the apple snail pest. Saponins are toxic glucosides that are authorised for use in exceptional cases and make it possible to temporarily reduce the adult snail population by 80-90% during the current crop year, on the understanding that the mollusc will recover the following year due to its fertility. For instance, document US 2017/086467 A1 describes a molluscicide composition comprising a saponin-containing plant extract and a caffeine-containing plant extract from a different plant, wherein the saponin-containing plant extract and a caffeine-containing plant extract act synergistically as molluscicides.

The Denmark Patent application DK 2008 00421 A discloses a molluscicide consisting of an aqueous solution of citric acid monohydrate, hydrochloric acid and a surfactant Propetal^{®} which acts immediately killing against snails of the species *Arion lusitanicus.* A strong inorganic acid H₂SO₄, HCI, or HNO₃ at a concentration of the order of 0.1 to 0.5 mol/c is used. A non-ionic surfactant of the type of the fatty acid-polyalkylene glycol ether in concentrations of the order of magnitude between 0.5 to 5 g/d is used. However, this patent application does not disclose the use of ethoxylated alcohol of the type alkyl polyethylene-polypropylene glycol (EO-PO) with a combination of acetic acid. PCT application WO 2014/016640 A1 also discloses a composition for slug combating agent, specifically *Arion lusitanicus* snail.

The scientific articles of Pamela Martin *et al.,* 2018 and Marleena Hagner *et al.,* 2015 describe other compositions for controlling garden snails with vinegar.

Patent application US 2006/045898 A1 describes a composition for controlling snails containing active ingredient selected from the group consisting of boric acid. Patent application US 2012/288335 A1 discloses a soil stabilization composition for application to soil comprising sulphuric acid, phosphoric acid, citric acid, and nonylphenol 190. However, neither of the two patent applications disclose the use of acetic acid with a non-ionic surfactant.

The scientific article of Eduardo Cyrino Oliveira-Filho *et al.,* 2017 describes a composition for repelling toxic snails with nonylphenol ethoxylate and US 5 503 836 A discloses a method for controlling molluscs with non-ionic surfactants. Although they do not disclose the use of the type alkyl polyethylene-polypropylene glycol (EO-PO).

Patent documents CN 108 342 256 A, CN 103 923 514 B and US 2016/298059 A1 disclose cleaning compositions containing a nonionic alkoxylated surfactant but none of the documents discloses acetic acid.

The inventors of the present invention have developed a water-based composition for eradicating the apple snail pest, comprising acetic acid and an alcohol ethoxylate of the type alkyl polyethylene-polypropylene glycol (EO-PO), that overcomes the drawbacks of the prior art compositions. The composition of the present invention is effective while also being environmentally friendly. The inventors observed that, surprisingly, there is a synergistic effect with the composition, thereby increasing its efficacy.

In this document, the term "water-based" means that the composition of the present invention is dissolved in water. As such, when expressing the composition in percentages, the remaining percentage up to 100% of the composition should be understood as being water.

Examples of mineral acids are: sulphuric acid, nitric acid, hydrochloric acid, phosphoric acid, boric acid, hydrofluoric acid, hydrobromic acid and perchloric acid.

Examples of organic acids are: acetic acid, citric acid, formic acid, maleic acid, tartaric acid, salicylic acid and oxalic acid.

In the composition of the invention the acid is acetic acid.

The acid is in a concentration between 20 and 80 vol.% of the total composition. Without being tied to any speculative theory, it is very possible that the acidity of said acids permeates the shell and exposes the body of the mollusc to the atmosphere by dissolving the calcium carbonate base of said shell.

In the composition of the invention the non-ionic surfactant is an ethoxylated alcohol of the type alkyl polyethylene-polypropylene glycol (EO-PO).

The non-ionic surfactant is in a concentration between 5 and 20 vol.% of the total composition. Without being tied to any speculative theory, it is very possible that the effect of the non-ionic surfactants is to make the lipid fraction of the mollusc body soluble, damaging the internal organs of the mollusc, including those associated with its respiratory system. Likewise, the reductive surfactant effect of the oxygen dissolved in the environment encourages the asphyxiation of the mollusc.

To be applied, the acid-surfactant composition of the present invention is diluted in the water flooding the paddy field up to a concentration between 0.1 and 1 vol.‰. Preferably, said composition is diluted to a concentration between 0.3 and 0.5 vol.‰.

In addition, the present invention discloses the use of the aforementioned composition for eradicating the apple snail pest. Preferably, the use of the present invention is to soften, permeate and dissolve the shell of the apple snail. Preferably, the use of the present invention is to produce expanding and irreversible tissue and organ damage in the soft body of the apple snail. Preferably, the use of the present invention is to cause the asphyxiation of the apple snail.

Below, preferred embodiments of the present invention will be described in detail by way of example with reference to the accompanying drawings.

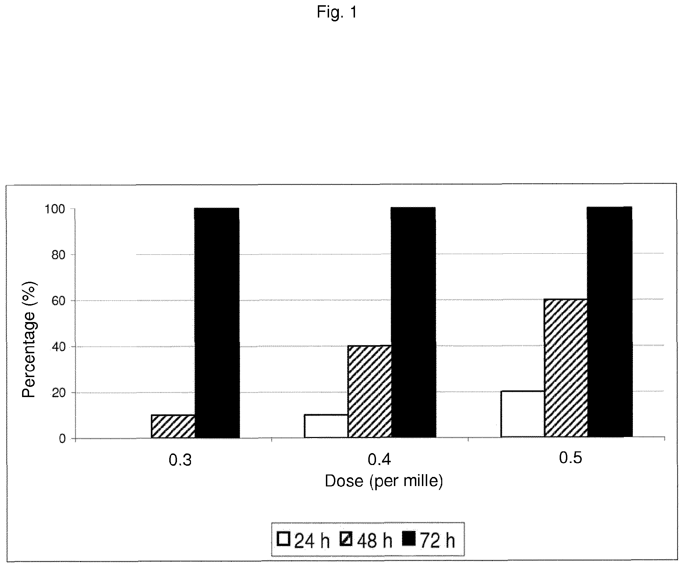

Fig. 1 is a graph showing the mortality (%) of the apple snail using a standard composition containing acetic acid and a surfactant identified generically as CAS 64366-70-7, which is part of the present invention. The y-axis shows the percentage mortality of the apple snail and the x-axis shows the concentrations of the composition of the present invention: 0.3 vol.‰, 0.4 vol.‰ and 0.5 vol.‰. The effect of each concentration was analysed 24h, 48h and 72h following application.

### EXAMPLES

### EXAMPLE 1: Preparation and definition of the composition of the present invention

Aqueous solutions containing different compositions were prepared. They were diluted in the paddy field water to a concentration of 0.5 vol.‰ and the effect thereof was analysed after 72h.

The standard composition contained 50% acetic acid and 10% ethoxylated alcohol, corresponding generically to CAS 64366-70-7. 100% mortality was observed.

The composition that comprised only 50% acetic acid resulted in 30% mortality, and it was observed that apple snails of all sizes survived.

The composition containing only 10% ethoxylated alcohol resulted in 55% mortality, and it was observed that small and medium-sized apple snails survived.

The composition of mixture 1 contained 50% acetic acid and 5% ethoxylated alcohol. This resulted in 75% mortality, and it was observed that small-sized apple snails survived.

### Comparative Mixture 2:

The composition of mixture 2 contained 40% sulphuric acid and 10% ethoxylated alcohol. 100% mortality was observed.

| **EFFICACY AFTER 72 HOURS OF PRODUCTS APPLIED AT 0.5 VOL.‰** | | | | | |
|---|---|---|---|---|---|
| **PRODUCT** | **HOAc (%)** | **H₂SO₄ (%)** | CAS 64366 -70-7 **(%)** | **MORTALITY (%)** | **COMMENTS** |
| **Standard** | 50 | 0 | 10 | 100 | total mortality |
| **Acetic acid** | 50 | 0 | 0 | 30 | all sizes survived |
| **Ethoxylated alcohol** | 0 | 0 | 10 | 55 | small and medium-sized snails survived |
| **Mixture 1** | 50 | 0 | 5 | 75 | smallest snails survived |
| **Mixture 2** | 0 | 40 | 10 | 100 | total mortality |

In all the solutions tested, a visible effect was observed immediately: the opening of the corneous operculum and the release of bubbles from inside the snail shell.

Subsequently, it was observed that the animal body emerged and its turgor gradually decreased until the body became amorphous mucous discharged from the shell. The effect was quicker in large adults.

By way of a summary, Fig. 1 shows the efficacy, in terms of mortality, of the composition of example 1 at three different concentrations: 0.3 vol.‰, 0.4 vol.‰ and 0.5 vol.‰.

As can be seen in Fig. 1, the composition of the present invention at a concentration of 0.3 vol.‰ did not show any mortality after 24h, showed 10% mortality after 48h and its effect reached 100% mortality after 72h.

After 24h, the composition of the present invention at a concentration of 0.4 vol.‰ showed very low mortality (10%). 48h after application, the mortality increased to 40% and reached full mortality (100%) after 72h.

After 24h, the composition of the present invention at a concentration of 0.5 vol.‰ showed 20% mortality; this increased to 60% after 48h and reached 100% after 72h, as with the other compositions.

Moreover, it was observed that all the molluscs underwent shell softening and even perforation at concentrations between 0.5 vol.‰ and 1 vol.‰ of the composition.

### EXAMPLE 2: Definition and efficacy of the surfactants according to the composition of the present invention

Aqueous solutions containing different compositions were prepared. They were diluted in the paddy field water to a concentration of 0.5 vol.‰ and the effect thereof was analysed after 72h.

As in example 1, the standard composition contained 50% acetic acid and 10% CAS 64366-70-7 ethoxylated alcohol. 100% mortality was observed.

### Comparative Mixtures 1-3:

The composition of mixture 1 contained 50% acetic acid and 10% linear alkylbenzene sulphonate. Unlike the other surfactants used, linear alkylbenzene sulphonate is an anionic surfactant. In this case, the mortality only reached 50% and it was observed that apple snails of all sizes survived.

The composition of mixture 2 contained 50% acetic acid and 10% ethoxylated nonylphenol 9EO. This produced 70% mortality and it was observed that small and medium-sized apple snails survived.

The composition of mixture 3 contained 50% acetic acid and 10% C8-16 alkyl polyglucoside. The mortality reached 85% and it was observed that small apple snails survived.

| **EFFICACY AFTER 72 HOURS OF THE PRODUCT APPLIED AT 0.5 VOL.‰ (VARIOUS SURFACTANTS AT 10 VOL.%)** | | | | |
|---|---|---|---|---|
| **PRODUCT** | **Acetic acid (%)** | **SURFACTANT** | **MORTALITY (%)** | **COMMENTS** |
| **Standard** | 50 | CAS 64366-70-7 | 100 | non-ionic surfactant: total mortality |
| **Mixture 1** | 50 | Linear alkylbenzene sulphonate | 50 | anionic surfactant: snails of all sizes survived |
| **Mixture 2** | 50 | Ethoxylated nonylphenol 9EO | 70 | non-ionic surfactant: small and medium-sized snails survived |
| **Mixture 3** | 50 | C8-16 alkyl polyglucoside (*) | 85 | non-ionic surfactant: smallest snails survived |

| | | | | |
|---|---|---|---|---|
| (*) Saponins are natural glucosides. | | | | |

## Claims

1. Water-based composition for eradicating the apple snail pest, **characterised in that** it comprises from 20 to 80 vol.% of the total composition of a mineral acid or an organic acid, wherein the acid is acetic acid and from 5 to 20 vol. % of the total composition of a non-ionic surfactant, wherein the non-ionic surfactant is an alkoxylated alcohol of the type alkyl polyethylene-polypropylene glycol (EO-PO).

2. Use of the composition according to claim 1 for eradicating the apple snail pest.

3. Use according to claim 2 for softening, permeating and dissolving the shell of the apple snail.

4. Use according to any of claims 2 or 3 for producing expanding and irreversible tissue and organ damage in the soft body of the apple snail.

5. Use according to any of claims 2 to 4 for causing the asphyxiation of the apple snail.

6. Use according to any of claims 2 to 5, **characterised in that** said composition is diluted to a concentration between 0.1 and 1 vol.‰ in the water flooding the paddy field.

7. Use according to claim 6, **characterised in that** said composition is diluted to a concentration between 0.3 and 0.5 vol.‰ in the water flooding the paddy field.

## Patentansprüche

1. Zusammensetzung auf Wasserbasis zum Ausrotten des Apfelschneckenschädlings, **dadurch gekennzeichnet, dass** sie 20 bis 80 Vol.-% der Gesamtzusammensetzung aus einer Mineralsäure oder einer organischen Säure umfasst, wobei die Säure Essigsäure ist, und 5 bis 20 Vol.-% der Gesamtzusammensetzung aus einem nicht-ionischen Tensid, wobei das nichtionische Tensid alkoxylierter Alkohol von dem Typ Alkyl-Polyethylen-Polypropylen-Glycol (EO-PO) ist.

2. Verwendung der Zusammensetzung nach Anspruch 1 zum Ausrotten des Apfelschneckenschädlings.

3. Verwendung nach Anspruch 2 zum Erweichen, Durchdringen und Auflösen des Schneckenhauses der Apfelschnecke.

4. Verwendung nach einem der Ansprüche 2 oder 3 zum Erzeugen sich verbreitender und irreversibler Gewebe- und Organschädigung des Weichkörpers der Apfelschnecke.

5. Verwendung nach einem der Ansprüche 2 bis 4 zum Verursachen des Erstickens der Apfelschnecke.

6. Verwendung nach einem der Ansprüche 2 bis 5, **dadurch gekennzeichnet, dass** die Zusammensetzung auf eine Konzentration zwischen 0,1 und 1 Vol.-%o in dem Wasser, das das Reisfeld überflutet, verdünnt ist.

7. Verwendung nach Anspruch 6, **dadurch gekennzeichnet, dass** die Zusammensetzung auf eine Konzentration zwischen 0,3 und 0,5 Vol.-%o in dem Wasser, das das Reisfeld überflutet, verdünnt ist.

## Revendications

1. Composition à base d'eau pour éradiquer le parasite de l'escargot de la pomme, **caractérisée en ce qu'**elle comprend de 20 à 80 % en volume de la composition totale en un acide minéral ou en un acide organique, dans laquelle l'acide est l'acide acétique, et de 5 à 20 % en volume de la composition totale en un agent tensioactif non ionique, dans laquelle l'agent tensioactif non ionique est un alcool alkoxylé de type alkyl polyéthylène-polypropylène glycol (EO-PO).

2. Utilisation de la composition selon la revendication 1 pour éradiquer le parasite de l'escargot de la pomme.

3. Utilisation selon la revendication 2 pour ramollir, imprégner et dissoudre la coquille de l'escargot de la pomme.

4. Utilisation selon l'une quelconque des revendications 2 ou 3 pour produire des dommages tissulaires et organiques expansifs et irréversibles dans le corps mou de l'escargot de la pomme.

5. Utilisation selon l'une quelconque des revendications 2 à 4 pour provoquer l'asphyxie de l'escargot de la pomme.

6. Utilisation selon l'une quelconque des revendications 2 à 5, **caractérisée en ce que** ladite composition est diluée jusqu'à une concentration comprise entre 0,1 et 1 vol.%o dans l'eau qui inonde la rizière.

7. Utilisation selon la revendication 6, **caractérisée en ce que** ladite composition est diluée jusqu'à une concentration comprise entre 0,3 et 0,5 vol.%o dans l'eau qui inonde la rizière.
